# EUROPÄISCHE PATENTANMELDUNG

(11) **EP 1 287 885 A1**
(43) Veröffentlichungstag der Anmeldung: **05.03.2003**
(21) Anmeldenummer: 02012762.7
(22) Anmeldetag: 08.06.2002
(51) Int. Cl.: B01J 20/24, B01J 20/26, B01J 20/16, B01D 15/00

(54) **Adsorptionsmittel, Verfahren zu deren Herstellung und deren Verwendung**

(30) Priorität: 31.08.2001 DE 10142736
(71) Anmelder: Degussa AG, 40474 Düsseldorf (DE)
(72) Erfinder: Schmitt, Matthias, Dr., 69151 Neckargemünd (DE); Kuge, Martin, Dr., 63477 Maintal (DE); Stober, Reinhard, Dr., 63594 Hasselroth (DE); Esser, Susanne, Dr., 51105 Köln (DE); Görl, Udo, Dr., 45657 Recklinghausen (DE); Leimann, Jürgen, Dr., 60598 Frankfurt (DE); Kopietz, Jan, 58730 Fröndenberg (DE); Teike, Silke, 50189 Elsdorf (DE)

(57) **Zusammenfassung**

Die Erfindung betrifft ein Adsorptionsmittel für organische Verbindungen, bestehend aus einem Füllstoffgranulat, das Füllstoffe von 20 bis 99,9 Gew.-% und ein Bindemittel enthält.

Das Adsorptionsmittel wird hergestellt durch Mischen von mindestens einem Bindemittel mit mindestens einem Füllstoff und Granulation in einem Misch- oder Granulationsapparat.

Das Adsorptionsmittel kann zur Adsorption und / oder Absorption von organischen und / oder anorganischen Stoffen aus einer flüssigen oder gasförmigen Phase verwendet werden.

## Beschreibung

Die Erfindung betrifft Adsorptionsmittel, ein Verfahren zu ihrer Herstellung sowie ihrer Verwendung.

Zur Aufbereitung von Prozesslösungen, zur Rückgewinnung von Wertstoffen aus Produktionslösungen, sowie zur Abluft- und Abwasserbehandlung sind heute adsorptive Verfahren weit verbreitet. Da die Anforderungen an die Reinheit von Produktionslösungen, an die Rückgewinnung von Wertstoffen, sowie die zulässigen Abluftemissionen und Abwasserbelastungen ständig steigen, ist eine permanente Weiter- und Neuentwicklung bestehender Adsorptionstechnologien notwendig.

Die Eignung der adsorptiven Verfahren wird von den Adsorbereigenschaften, wie Selektivität, Adsorptionskapazität, Limitierung des Stofftransports und der Standzeit des Adsorbers, bestimmt.

Heute werden zur Adsorption aus der wässrigen Phase oder aus der Luft vornehmlich Adsorber auf Aktivkohle- oder Polymerbasis sowie anorganische Adsorbentien eingesetzt. Die Aktivkohle stellt ein hochporöses, aktives Kohlenstoffgerüst dar, welches hauptsächlich aus Kohlenstoff und geringen Mengen an chemisch gebundenem Sauerstoff und Wasserstoff besteht. Aktivkohle zeichnet sich durch sehr hohe spezifische Oberflächen aus, die im Bereich von 500 bis 1500 m²/g liegen. Die Porenstruktur besteht hauptsächlich aus Mikro- und Makroporen, weshalb die Aktivkohle besonders gut Moleküle mit einem Molgewicht kleiner als 200 Da adsorbiert. Das spezifische Gesamtporenvolumen von Aktivkohle liegt im allgemeinen bei 1 - 1.5 ml/g.

Nachhaltig wirkt sich auf die Adsorptionsfähigkeit der Aktivkohle aus, dass ihre Oberfläche sich sehr hydrophil verhält.

Durch die Benetzung der Oberfläche mit Wasser(-molekülen) wird die Adsorptionskapazität für organische unpolare Moleküle reduziert. Des weiteren ist die maximal mögliche Molekülgröße, die an Aktivkohle adsorbiert werden kann, aufgrund der Mikro- und Submikroporen limitiert. Als Alternative zur Aktivkohle stehen heutige makro- und mikroporöse Polymeradsorber zur Verfügung, die zum Beispiel aus Styrol-Divinyl-Copolymerisaten bestehen und spezifische Oberflächen zwischen 400 bis 1400 m²/g besitzen. Diese Polymeradsorber zeigen je nach Polymer und Oberflächenmodifikation ein hydrophobes oder hydrophiles Verhalten. Die optimal zu adsorbierenden Molekülmassen liegen aber häufig unter 1000 Da.

Ferner sind füllstoffhaltige Kautschukpulver (zum Beispiel Pulverkautschuk) bekannt (DE 199 24 367.0). Diese werden durch eine säurekatalytische Koagulation einer Polymeremulsion in Anwesenheit einer Füllstoffsuspension hergestellt.

Bekannt sind Granulationsverfahren, die Pulverruße mittels eines Granulationshilfsmittels in einer Perlmaschine granulierten (DE 196 23 198 A1, DE 197 56 501 A1, US 4,222,727, US 4,789,321, US 3,787,161).

Nachteile ergeben sich bei diesen Produkten aufgrund der Herstellung. Da die Pulver aus einer wässrigen Phase mit Füllstoffteilchen und Polymertropfchen hergestellt werden, erfolgt eine teilweise Belegung der Füllstoffoberfläche mit dem Polymer. Hierdurch steht diese Oberfläche nicht mehr für die Adsorption von Schadstoffen zur Verfügung.

Aufgabe der Erfindung ist es, ein gut anwendbares und wirksames Adsorptionsmittel zur Verfügung zu stellen, das den größten Teil der Oberfläche für die Adsorption von Schadstoffen bereitstellt.

Gegenstand der Erfindung sind Adsorptionsmittel für organische Verbindungen, welche dadurch gekennzeichnet sind, daß sie aus einem Füllstoffgranulat, das Füllstoffe von 20 bis 99,9 Gew.-%, bevorzugt 50 bis 99,9 Gew.-%, und gegebenenfalls ein Bindemittel enthält, bestehen.

Der Füllstoff kann ein natürlicher oder synthetischer, organischer oder anorganischer Füllstoff sein. Der Füllstoff kann ein Füllstoffgemisch sein.

Das Bindemittel kann ein Bindemittelgemisch sein.

Das Bindemittel, beispielsweise Kautschuk, kann auf dem Füllstoff homogen verteilt vorliegen.

Die Adsorption der organischen Verbindungen kann aus wässrigen Systemen oder Luft erfolgen.

Der Anteil des Bindemittels in den Granulaten kann 0,1 bis 80%, bevorzugt 0,1 bis 50%, betragen.

Als Füllstoffe können die aus der Kautschukverarbeitung bekannten Ruße, Pigmentruße, insbesondere aus Recyclingverfahren von Gummiprodukten gewonnene Recyclate, wie zum Beispiel Gummimehl oder Sekundärfüllstoffe, Aktivkohle, weiße Füllstoffe synthetischer Natur, wie zum Beispiel gefällte oder pyrogene Kieselsäuren, Zeolithe, Natriumaluminiumsilicate oder natürliche Füllstoffe, wie zum Beispiel Kieselkreide, Clays, Gips, oder Zement verwendet werden.

Als Füllstoff können auch die bei der thermischen Aufbereitung von Lackschlämmen anfallenden pulverförmigen Recyclate (zum Beispiel Salemer®) verwendet werden.

Bevorzugt können Ruße, wie sie allgemein in der Kautschukverarbeitung oder als Pigmente eingesetzt werden, oder auch Ruße, deren Oberfläche durch oxidative oder reduktive Nachbehandlung modifiziert werden, verwendet werden.

Beispielsweise können Furnaceruße, Gas- und Flammruße mit einer Jodadsorptionszahl 5 bis 1200 m²/g, insbesondere 25 bis 1075 m²/g, einer CTAB-Zahl von 15 bis 700 m²/g, einer DBP-Adsorption von 30 bis 400 ml/100 g und einer 24 M4 DBP-Zahl von 50 bis 400 ml/100 g verwendet werden.

In einer besonderen Ausführungsform können Ruße, die sich durch eine besonders große spezifische Oberfläche und Struktur auszeichnen, wie zum Beispiel Pyrolyse-, Lichtbogen oder Plasmaruße verwendet werden.

Diese Ruße können eine nach der bekannten BET-Methode bestimmte N₂-Oberfläche von 500 bis 2000 m²/g, insbesondere zwischen 600 bis 1500 m²/g, und eine DBP-Zahl von 300 bis 600 ml/100g aufweisen.

Bevorzugt können Füllstoffe mit einer hohen spezifischen Oberfläche eingesetzt werden. Insbesondere können Ruße, die aufgrund ihrer hohen spezifischen Oberfläche hohe Adsorptionskapazitäten besitzen, verwendet werden. Das Adsorptionsvermögen wird mit zunehmender Oberfläche und Struktur des Rußes verbessert. Durch oxidative Nachbehandlung kann die Oberfläche mit sauerstoffhaltigen funktionellen Gruppen modifiziert und das Adsorptionsverhalten der Ruße beeinflusst werden.

In Abhängigkeit von der Modifizierung der Oberflächen können Lösungsmittel, Polymere etc. in unterschiedlichem Ausmaß adsorbiert werden. Die spezifische Oberfläche des Adsorptionsmittel kann durch das Verhältnis von eingesetztem Füllstoff zu Bindemittel sowie durch die Eigenschaften des Füllstoffes variiert werden.

Als Füllstoff können auch die aus dem Kautschuksektor bekannten gefällten Kieselsäuren sowie pyrogene Kieselsäuren, bevorzugt solche, die durch Modifikation hydrophobiert sind, verwendet werden. Diese können eine nach der bekannten BET-Methode bestimmte N₂-Oberfläche von 35 bis 1100 m²/g, insbesondere 100 bis 1000 m²/g, eine CTAB-Oberfläche von 30 bis 500 m²/g, eine DBP-Zahl von 150 bis 400 ml/100g besitzen.

Die Oberfläche der Füllstoffe kann mit einer oder mehreren Organosiliciumverbindungen der allgemeinen Formel

[R¹ ₙ(RO)₃₋ₙ Si-(Alk)ₘ - (Ar)p ] q [B] (I),

R¹ ₙ (RO)₃₋ₙ Si - (Alkyl) (II),

oder

R¹ ₙ (RO)₃₋ₙ Si-(Alkenyl) (III)

modifiziert sein,
in denen bedeuten
- B:: -SCN, -SH, -Cl, -NH₂ (wenn q = 1) oder -Sx- (wenn q = 2)
- R und R¹:: eine Alkylgruppe mit 1 bis 4 Kohlenstoffatomen, verzweigt oder nicht verzweigt, den Phenylrest, wobei alle Reste R und R1 jeweils die gleiche oder eine verschiedene Bedeutung haben können, bevorzugt eine Alkylgruppe,
- n:: 0; 1 oder 2
- Alk:: einen zweiwertigen geraden oder verzweigten Kohlenstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, dass p und n nicht gleichzeitig 0 bedeuten,
- x:: eine Zahl von 2 bis 8,
- Alkyl:: einen einwertigen geraden oder verzweigten ungesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Die erfindungsgemäßen Adsorptionsmittel können auch die erwähnten Füllstoffe wie z.B. Kieselsäuren, Gummimehl, Aktivkohle, Natriumaluminiumsilicate, Zeolithe, Zement, Gips und Ruß nicht nur einzeln sondern auch im Gemisch enthalten.

In Abhängigkeit vom Füllgrad des Adsorptionsmittels können in die Oberfläche Füllstoffteilchen mit eingebunden sein, so dass ein Verkleben der nach dem erfindungsgemäßen Verfahren hergestellten Partikel auch unter Druck, wenn zum Beispiel mehrere Säcke aufeinanderliegen, nicht erfolgt.

Als Bindemittel können alle bekannten Kautschuke einzeln oder ein Gemisch aus diesen verwendet werden. Sie können als Latices, wässrigen Polymeremulsionen, Kautschuklösungen verwendet werden. Vorzugsweise können Naturkautschuk, Emulsions-SBR mit einem Styrolanteil von 10 bis 50%, Butyl-Acrylnitril-Kautschuk, Butylkautschuk,Nitrilkautschuk, Terpolymere aus Ethylen, Propylen (EPM) und nicht konjugierte Diene (EPDM), Butadienkauschuk, DBR, hergestellt nach dem Lösungspolymerisationsverfahren, mit einem Styrolgehalt von 10 bis 25%, sowie Gehalten an 1,2-Vinylbestandteilen von 20 bis 55% und Isoprenkautschuken, insbesondere 3,4 Polyisopren, Fluorkautschuk, Chlorkautschuk, Silikonkautschuk verwendet werden.

Neben den genannten Kautschuken können folgende Elastomere, einzeln oder im Gemisch, verwendet werden:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Blockpolymere, Epichlorhydrine, chemisch modifizierte Naturkautschuke, wie zum Beispiel epoxidierte Typen.

Als Bindemittel können auch Öle, Wachse oder sonstige langkettige Kohlenwasserstoffe als Reinstoffe, Schmelzen, Lösungen oder Emulsionen einzeln oder in einem Gemisch verwendet werden.

Die erfindungsgemäßen Adsorptionsmittel können somit alle bekannten Kunststoffdispersionen auf Basis von Styrolacrylat (zum Beispiel Mowilith®), Vinylacetat oder Reinacrylat oder auch Harze wie Alkydharze, Epoxidharze oder olefinische Wachse (Ultralube®) einzeln oder ein Gemisch aus diesen enthalten. Als Bindemittel können Latices, wässrigen Polymeremulsionen, Kautschuklösungen oder aufgeschmolzen Wachse verwendet werden.

Die in den erfindungsgemäßen Adsorptionsmittel eingesetzten Rohmaterialien können zum Teil thermisch nahezu rückstandsfrei entsorgt werden, was als weiterer Vorteil gegenüber zahlreichen insbesondere auch anorganischen Adsorptionsmitteln zu sehen ist.

Ein weiterer Gegenstand der Erfindung ist ein Verfahren zur Herstellung der erfindungsgemäßen Adsorptionsmittel, welches dadurch gekennzeichnet ist, dass man mindestens ein Bindemittel mit mindestens einem Füllstoff mischt und in einem Misch- oder Granulationsapparat granuliert.

In einer besonderen Ausführungsform kann als Misch- oder Granulationsapparat ein Mischgranulator verwendet werden. Der Feststoff kann hier mittels einer gravimetrischen oder volumetrischen Pulverdosierung dem Mischgranulator zudosiert werden. Durch eine Stachelwelle als Misch- und Granulationseinrichtung kann das Mischgut zum Ausgang transportiert werden. Die Dosierung des Granulationshilfsmittels (als wässrige Emulsion, Latex, Schmelze oder in Lösung) kann volumetrisch oder gravimetrisch erfolgen. Das Granulationshilfsmittel (-Gemisch) kann mittels einer oder mehreren Düsen an einer oder mehreren Positionen eingedüst werden. Es können auch unterschiedliche Granulationshilfsmittel (-Gemische) an unterschiedlichen Stellen eingedüst werden. Die Mischtemperatur kann 20° bis 140°C, vorzugsweise 60° bis 120°C betragen. Die Drehzahl der Versuchsanlage kann in dem Bereich von 100 bis 1500 UpM, vorzugsweise 100 bis 1000 UpM, variieren. Der Füllstoffdurchsatz der Versuchsanlage kann von 10 bis 150 kg/h, vorzugsweise 20 bis 80 kg/h variieren. Die Stromaufnahme der Versuchsanlage kann von 10 bis 30 A betragen. Der Füllststoffdurchsatz für eine Produktionsanlage kann von 0,5 bis 3,5 t/h in einer bevorzugen Ausführung zwischen 0,5 bis 1,5 t/h variieren. Die Umfangsgeschwindigkeit der Stachelspitzen kann zwischen 1 und 30 m/s, vorzugsweise zwischen 10 und 20 m/s, betragen. Die Verweilzeit des Füllstoffes in dem Mischgranulator kann zwischen 20 und 600 Sekunden betragen.

Neben der Art der Verdüsung des Granulationshilfsmittels kann auch der Ort der Verdüsung von wesentlichem Einfluss auf die Qualität der sich bildenden Präparation sein.

Der Mischgranulator besteht aus einem liegend angeordneten, feststehenden Rohr (Stator) mit einer sich darin drehenden Stachelwelle. Der Mischgranulator besitzt gewöhnlich einen Einlaufbereich, in dem der Ausgangsfeststoff (oder ein Gemisch verschiedener Stoffe) dem Mischgranulator zugeführt wird. In diesem Bereich befindet sich eine Förderschnecke, die dem zugeführten Füllstoff eine Bewegungskomponente in axialer Richtung äufprägt. An den Einlaufbereich schließt sich der eigentliche Granulationsbereich an, in dem der Feststoff durch mechanische Einwirkung der sich drehenden Stacheln und durch Abrollen an der Innenwand des Stators agglomeriert. Nach Verlassen des Granulationsbereiches gelangt das nun schon perlförmige Adsorptionsmittel in den Auslaufbereich und wird aus dem Mischgranulator kontinuierlich ausgeschleust.

In einer besonderen Verfahrensvariante kann der Granulator, der auch als schnelllaufender Mischer bezeichnet werden kann, nicht horizontal ausgerichtet, sondern schräg geneigt sein. Diese Neigung kann bis zu 90° betragen, was bedeutet, dass die Mischerachse vertikal ausgerichtet ist. Diese Anordnung hat den Vorteil, dass die Verweilzeit des Produktes im Aggregat in weiten Bereichen variiert werden kann. Der Füllstoff kann zudosiert und mit dem Bindemittel vermischt werden. Auch bei der hier beschriebenen Verfahrensvariante kann die oben beschriebenen Möglichkeiten zur Beeinflussung der Kornmorphologie, der Beschichtung oder der Mischung verschiedener Bindemittel beziehungsweise Füllstoffe genutzt werden. Es kann auch anstatt des pulverförmigen Füllstoffes feuchtes Material oder eine Suspension (in Wasser oder Lösungsmitteln) eingesetzt werden. Durch die hohe Scherwirkung des Rotors beziehungsweise durch die Abrollbewegung, welche dem Granulat im Apparat aufgeprägt wird, können annähernd sphärische Teilchen entstehen. Auch bei einem Einsatz von Suspensionen (Lösungen) des Füllstoffes können die zuvor beschriebenen Maßnahmen zur Beeinflussung der Kornmorphologie, der Beschichtung oder der Mischung verschiedener Granulationshilfsmittel beziehungsweise Füllstoffe möglich sein. Es kann auch eine kombinierte Zugabe der Füllstoffe realisiert werden, was bedeutet, dass zum Beispiel zuerst das Füllstoffpulver mit einem Bindemittel vermischt wird und dann noch eine Füllstoffsuspension zugeführt wird oder umgekehrt.

Ferner können physikalisch/chemische Prozesse im Mischer, wie zum Beispiel die Reaktion zwischen Kieselsäure und Organosilanen oder das Verdampfen von Wasser oder Lösungsmitteln durchgeführt werden. Falls ein Produkt mit Bindemittel, die zum Verkleben neigen hergestellt werden soll, so kann an einer oder an mehreren Stellen des Granulators eine weitere Feststoffzugabe (des gleichen oder eines anderen Feststoffes) erfolgen. Durch diese zusätzliche Beschichtung kann das Fließverhalten des Granulates deutlich verbessert werden.

Je nach Konstruktion des Mischgranulators können die einzelnen Bereiche des Mischgranulators unterschiedliche Größen aufweisen. In jedem Fall sollten Einlauf- und Auslaufbereich zu Gunsten des Granulationsbereichs möglichst klein gehalten werden. Nach Eintritt des pulverförmigen Ausgangsfeststoffes in den Granulationsbereich beginnt die Agglomeration des Feststoffes und ist am Ende dieses Bereiches abgeschlossen. Um eine möglichst homogene Verteilung des Bindemittels über den gesamten Querschnitt der Füllstoffperlen zu erhalten, ist es erforderlich, dieses im ersten Drittel des Granulationsbereiches über den Füllstoff zu verdüsen.

Eine weitere Verbesserung der Homogenität der Einmischung des Bindemittels in den Füllstoff kann man erhalten, wenn zur Verdüsung mehrere Sprühdüsen eingesetzt werden, die in einer Ebene senkrecht zur Stachelwelle am Umfang des Stators verteilt sind. Die Zahl der Düsen kann zweckmäßiger Weise auf zwei bis fünf begrenzt werden.

Durch den geringen Abstand der Stachelspitzen zur Innenwand des Stators können Ablagerungen weitgehendst vermieden werden. Dadurch kann eine homogenere Verteilung des Granulationshilfsmittels auf dem Füllstoff erfolgen.

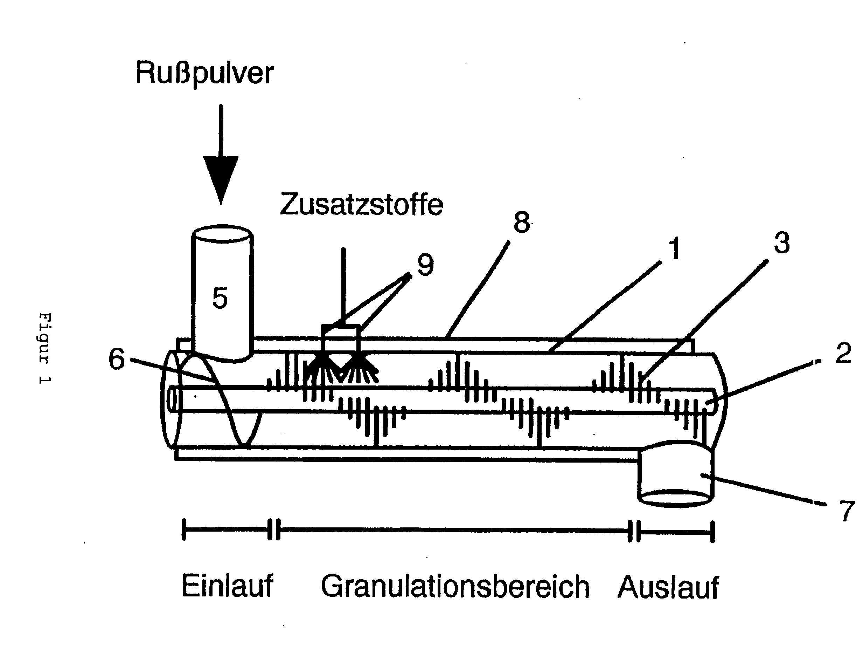

Diese besondere Ausführung des erfindungsgemäßen Verfahrens zur Herstellung des Adsorptionsmittels wird anhand der Figur 1 (Schematische Darstellung des Mischgranulators) näher erläutert.

Gemäß Figur 1 besteht der Mischgranulator aus einem liegend angeordneten feststehenden Rohr, dem Stator 1, und einer darin axial angeordneten sich drehenden Stachelwelle 2 mit den wendelförmig angeordneten Stacheln 3. Zwischen der Stachelwelle 2 und dem Stator 1 befindet sich der Perlraum des Mischgranulators. Der Füllstoff wird dem Granulator am Einlauf 5 zugeführt. Im Bereich des Einlaufs befindet sich auf der Stachelwelle 2 eine Förderschnecke 6, die den Füllstoff in axialer Richtung zum Auslauf 7 fördert. Der Stator 1 ist doppelwandig ausgeführt und erlaubt die Temperierung der Statorwandung mit Hilfe einer Flüssigkeit 8. Im ersten Drittel des Granulationsbereiches des Stators befinden sich auf seiner Oberseite Durchgangsbohrungen, durch die Sprühdüsen 9 für die Zugabe der Granulationshilfsmittel eingeführt werden.

Die so hergestellten Produkte können falls erforderlich anschließend getrocknet und als Adsorptionsmittel in der Umwelttechnologie verwendet werden.

Die obengenannten Feststoffe ,kann man bevorzugt in feinteiliger Form einsetzen.

Füllstoffe, die aus einer flüssigen Phase hergestellt werden, können auch als Filterkuchen zum Einsatz kommen. So kann beispielsweise die gefällte Kieselsäure auch in Form eines salzfrei gewaschenen Filterkuchens Verwendung finden.

Bestehen die im Adsorptionsmittel eingesetzten Rohmaterialien ausschließlich aus Ruß oder einem Ruß/Latex Gemisch, lassen sie sich thermisch nahezu rückstandsfrei entsorgen. Dies ist als weiterer Vorteil gegenüber den aus dem Stand der Technik bekannten anorganischen Adsorbern zu sehen.

Obwohl die spezifischen Oberflächen der erfindungsgemäßen Adsorptionsmittel in Abhängigkeit von den enthaltenen Füllstoffen niedriger als die der üblicherweise eingesetzten Aktivkohlen sein kann, findet man zum Beispiel bei der Adsorption von Verbindungen aus der wässrigen Phase mit diesen eine höhere Gleichgewichtskapazität.

Als besonders geeignet erweisen sich die neuen Adsorptionsmittel für die Adsorption von unpolaren, schlecht wasserlöslichen organischen Verbindungen aus wässrigen Systemen und aus der Luft.

Der Einsatz der erfindungsgemäßen Adsorptionsmittel empfiehlt sich insbesondere, wenn die Konzentrationen der Adsorptive in mittlere bis hohen Konzentrationen vorliegen, die Adsorptive eine schlechte Wasserlöslichkeit beziehungsweise einen hohen Oktanol/Wasser-Verteilungskoeffizienten besitzen und eine hohe Reinheitsanforderung an das Filtrat gestellt wird.

Für diese Anwendung besonders geeignet können die erfindungsgemäßen Adsorptionsmittel mit einem Füllstoffgehalt von > 90 bis 99,9 %, insbesondere Füllstoffe mit hoher Struktur und hoher Oberfläche verwendet werden.

Ein bedeutendes Problem stellt die Verunreinigung von Gewässern durch das bei Havarien von Schiffen austretende Öl dar.

Das Ölbindevermögen des neuen Adsorptiönsmittels lässt sich insbesondere durch das Verhältnis von eingesetztem Ruß zu Granulationshilfsmittel sowie durch die Eigenschaften des Rußes (Primärpartikeldurchmesser, Struktur) variieren. Durch die geeignete Wahl beider Komponenten lässt sich die Eignung des Ölbinders auf spezielle Anforderungen hin (zum Beispiel Adsorption Leicht- oder Schweröl) optimal anpassen. Aufgrund der oberflächenaktiven Eigenschaften von Ruß ist auch die Adsorption niedermolekularer Substanzen möglich, was die Reinigungsleistung des erfindungsgemäßen Adsorptionsmittels im Hinblick auf einen möglichen Rest-CSB weiter erhöht.

Als besonders geeignet für die Aufnahme von auf dem Wasser aufschwimmenden Ölen (Öl in Phase) erweisen sich erfindungsgemäße Adsorptionsmittel mit einem Füllstoffgehalt von 50 bis 99,9 %, insbesondere 65 bis 97 %.

Der verfahrenstechnische Einsatz dieses Adsorptionsmittels zur Ölaufnahme kann wie folgt erfolgen:
- Flächiges Abstreuen des Adsorbers bei Tankerhavarien durch Hubschrauber oder vermengt mit Wasser durch Wasserkanonen.
   Der Absorber nimmt Öl von der Wasseroberfläche innerhalb kurzer Zeit auf und bindet es irreversibel. Aus dem Granulat entstehen großvolumige, gummiartige Aggregate, die sich leicht einsammeln lassen. Auch Öl aus Emulsionen kann mit dem erfindungsgemäßen Produkt aufgenommen werden.
- Abtrennung von Kohlenwasserstoffen und Emulsionen durch Festbettsäulen. Bei einem Druckverlust zwischen 1 und 2 bar/m können mit den neuen Produkten lineare Flussraten für Wasser von 20 bis 40 m/h erreicht werden.
- Aufnahme von Öl aus Gewässern durch Kissen, Schläuche und Saugbooms, die mit Ölbinder gefüllt sind.
   Neben dem flächigen Abstreuen und dem Einsatz von Separationscontainern ist es möglich, das Adsorptionsmittel in Textilien einzubinden und in Form von selbstsaugenden Ölsperren, Schläuchen und Kissen für die Reinigung von Gewässern einzusetzen.

Die Vorteile des erfindungsgemäß eingesetzten Adsorptionsmittels gegenüber den auf dem Markt verfügbaren Ölbindemitteln, wie zum Beispiel Polypropylen und Zellulose, liegen in der hohen Oleophilie und den hohen Ölaufnahmekapazitäten (bis zu ca. 7 Liter /kg Adsorber) die durch den hohen Anteil an Makroporen im Molekül bedingt ist. Diese Porenstruktur ermöglicht einen effizienten Stofftransport im Adsorbens, eine irreversible Bindung des Öls und eine hohe Standzeit.

Aufgrund der Hydrophobizität des gegebenenfalls als Granulationshilfsmittel eingesetzten Polymers ist ferner die Benetzung des Ölbinders mit Wasser und somit eine mögliche Koadsorption sehr stark reduziert.

Das erfindungsgemäße Adsorptionsmittel nimmt Benzin in gleicher Weise wie Wachse auf. Somit können zum Beispiel aliphatische Kohlenwasserstoffe insbesondere mit 5 bis 35 Kohlenstoffatomen gebunden werden, das heißt Moleküle von etwa 70 bis 500 Da.

Dazu gehören auch die niedermolekularen Verbindungen mit 5 bis 8 Kohlenstoffatomen (Benzol, Toluol etc.).

Ein weiteres bedeutendes Problem stellt die Aufarbeitung von Waschwässern aus KFZ-Waschanlagen dar. Hierbei ist es notwendig, geringe Mengen unpolarer Substanzen, wie Öle, Benzin, Wachse, die zum Teil dispergiert sind, irreversibel aufzunehmen und lange Standzeiten des Adsorbers zu garantieren.

Auch hier ist das Ölbindevermögen des neuen Adsorptionsmittels durch das Verhältnis von eingesetztem Ruß zum Granulationshilfsmittel (hier vorteilhaft ein Polymer) sowie durch die Eigenschaften des Rußes(Primärpartikeldurchmesser, Struktur) regelbar. Durch die geeignete Wahl beider Komponenten lässt sich die Eignung des Adsorptionsmittels auf hohe Standzeiten und spezielle Anforderungen hin (zum Beispiel Adsorption von Leichtöl- oder Benzin) optimal anpassen. Aufgrund der oberflächenaktiven Eigenschaften von Ruß ist auch die Adsorption niedermolekularer Substanzen möglich, was die Reinigungsleistung des Absorbers im Hinblick auf einen möglichen Rest-CSB weiter erhöht.

Als besonders geeignet für die Aufnahme von im Wasser dispergierten Ölen können erfindungsgemäße Adsorptionsmittel mit einem Füllstoffgehalt von 50 bis 99,9 Gew.-%, insbesondere 65 bis 97 Gew.-%, verwendet werden.
- Der verfahrenstechnische Einsatz dieses Adsorbers erfolgt in Wassseraufbereitungsanlagen. Der Absorber spaltet die Dispersion, nimmt die unpolaren Verbindungen aus dem Wasser auf und bindet sie irreversibel.
- Abtrennung von Kohlenwasserstoffen und Emulsionen durch Festbettsäulen. Bei einem Druckverlust zwischen 1 und 2 bar/m können mit den neuen Produkten lineare Flussraten für Wasser von 20 bis 40 m/h erreicht werden.

Die Vorteile des erfindungsgemäß eingesetzten Adsorptionsmittels gegenüber den auf dem Markt verfügbaren Ölbindemitteln, wie zum Beispiel Polypropylen und Zellulose, liegen in der hohen Oleophilie und den hohen Ölaufnahmekapazitäten (bis zu ca. 7 Liter je kg Adsorber), die durch den hohen Anteil an Makroporen im Molekül bedingt sind. Diese Porenstruktur ermöglicht einen effizienten Strofftransport im Adsorbens, eine irreversible Bindung des Öls und eine hohe Standzeit. Aufgrund der Hydrophobizität des zum Beispiel als Granulationshilfsmittel eingesetzten Polymers ist ferner die Benetzung des Ölbinders mit Wasser und somit eine mögliche Koadsorption sehr stark reduziert.

Das erfindungsgemäße Adsorptionsmittel nimmt Benzin in gleicher Weise wie Wachse auf. Somit können zum Beispiel aliphatische Kohlenwasserstoffe insbesondere mit 5 bis 35 Kohlenstoffatomen, also Moleküle von etwa 70 bis 500 Da, gebunden werden.

Dazu gehören auch die niedermolekularen Verbindungen mit 5 bis 8 Kohlenstoffatomen (Benzol, Toluol etc.).

Ein weiteres bedeutendes Problem stellen Emissionen von Kraftstoffen aus Kraftstoffbehältern, zum Beispiel bei der Betankung von Kraftfahrzeugen, dar. Hier wird in Zusammenhang mit Absaugvorrichtungen oder als Zusatzeinrichtung von Tanks Aktivkohle als Adsober eingesetzt. Aktivkohle zeichnet sich durch gute Adsorptionseigenschaften aus, wobei Benzindämpfe irreversibel aufgenommen werden. Ist die Adsorptionskapazität erreicht, muss die Aktivkohle regeneriert werden.

Das hier erfindungsgemäß beschriebene Adsorptionsmitttel zeichnet sich in einer besonderen Ausführung dadurch aus, dass aliphatische oder aromatische Kohlenwasserstoffe, Benzine, Toluol oder auch halogenierte Kohlenwaserstoffe bei hohen Konzentrationen in der Luft(Verhältnis Partialdruck zu Sättigungspartialdruck > 0,2)sehr gut adsorbiert werden. Die Adsorption ist jedoch nicht wie bei der Aktivkohle irreversibel, sondern reversibel. Das heißt: Die Konzentration der Kohlenwasserstoffe nimmt stark ab (Verhältnis Partialdruck zu Sättigungspartialdruck < 0,1). Die adsorbierten Stoffe werden dann langsam wieder in die Umgebung abgeben. Das heißt: Diese besondere Ausführungsform des Adsorbers regeneriert sich selbsttätig.

Das Adsorptionsvermögen des erfindungsgemäßen Adsorptionsmittels wird durch das Verhältnis von eingesetztem Ruß zu Granulationshilfsmittel sowie durch die Eigenschaften des Rußes(Primärpartikeldurchmesser, Struktur) bestimmt. Besonders geeignet für die Aufnahme von Kohlenwasserstoffen aus der Luft sind erfindungsgemäße Adsorptionsmittel mit einem Füllstoffgehalt von 50 bis 99,9 %, insbesondere 70 bis 99,9 %. Als Füllstoff können bevorzugt Ruße die sich durch eine besonders große spezifische Oberfläche und Struktur auszeichnen (Pyrolyse-, Lichtbogen oder Plasmaruße) mit einer Jodadsorptionszahl 400 bis 1200 m²/g, insbesondere 600 bis 1200 m²/g verwendet werden.
- Der verfahrenstechnische Einsatz des erfindungsgemäßen Adsorbers erfolgt beispielsweise in Kraftfahrzeugen als Filtersysteme im Kraftstoffkreislauf. Durch ein geeignetes Filtersystem am Kraftfahrzeugeinfüllstutzen können bei der Betankung gasförmige Emissionen verhindert werden. Nach Beendigung des Tankvorgangs und Schließen des Tanks regeneriert sich der Adsorber selbsttätig. Dieser Vorgang kann durch Einblasen von Frischluft gesteuert werden. Die kraftstoffhaltige Abluft kann anschließend dem Motor zur Verbrennung zugeführt werden.

### Beispiel 1-4:

Die folgenden Beispiele zeigen Herstellung und das Adsorptionsverhalten beispielhaft für Methylenblau im Vergleich mit den aus dem Stand der Technik bekannten Adsorptionsmitteln.

### Eingesetzte Rohstoffe:

### Rußfüllstoff

**Tabelle 1:**

| Charakeristik der eingesetzten Rußfüllstoffe | | | |
|---|---|---|---|
| | Ruß 1 | Ruß 2 | Ruß 3 |
| N₂-Oberfläche (BET) [m²/g] | ca. 800 | ca. 800 | ca. 800 |
| DBP-Absorption [ml/100g] | ca. 350 | ca. 350 | ca. 350 |
| Feuchte [%] | ca. 82 | ca. 85 | ca. 10 |

### Additive

- Additiv 1:: Ultralube, parafinisches Wachs
- Additiv 2:: Mowilith, Dispersion auf Basis von Styrol-Acrylsäureester
- Additiv 3:: E-SBR, Kagetex LBS 3060 (Emulsion eines Styrol-Butadien-Copolymers: Styrolgehalt ca. 30 %)

### Beschreibung der Versuchsdurchführung (Beispiel 1-4)

Die Granulation der Füllstoffe (Tabelle 1) erfolgt nach der erfindungsgemäßen Ausführung in einem Mischgranulator (Figur 1) unter konstantem Durchsatz. Die Additivdosierung erfolgt volumetrisch über geeignete Zerstäubungseinrichtungen in den Verfahrensraum des Granulators.

Die Produkte werden nach der Granulation bis zur Gewichtskonstanz im Trockenschrank getrocknet. Tabelle 2 zeigt die Versuchseinstellungen zur Herstellung der einzelnen Beispielprodukte.

**Tabelle 2:**

| Versuchsparamerter zur Herstellung der Beispielprodukte | | | | |
|---|---|---|---|---|
| | Beispiel 1 | Beispiel 2 | Beispiel 3 | Beispiel 4 |
| Füllstoff | 1 | 1 | 2 | 3 |
| Dosierung [kg/h] | 40 | 40 | 40 | 20 |
| Additiv | 1 | 2 | 3 | 3 |
| Anteil [%] | 7 | 7 | 7 | 7 |
| Dosierposition | ca. 5 cm nach Eintritt des Füllstoffs in den Granulator | | | |
| Temperatur Mischer [°C] | 100 | 100 | 100 | 100 |

Die analytischen Ergebnisse der hergestellten Muster sind in Tabelle 3 als Vergleich zu den beiden Referenzprodukten dargestellt.

Die Referenzprodukte sind:
- Referenz 1:: Kautschukpulver nach DE 199 24 367.0 mit einem Kautschukanteil von 17% und einer N₂ -Oberfläche (BET) von 455 m²/g.
- Referenz 2:: Formaktivkohle (Carbotech D43/1)

**Tabelle 3:**

| Analyseergebnisse der Beispiel- und Referenzprodukte | | | | | | |
|---|---|---|---|---|---|---|
| | Bsp. 1 | Bsp. 2 | Bsp. 3 | Bsp. 4 | Ref. 1 | Ref. 2 |
| Füllstoff | 1 | 1 | 2 | 3 | - | - |
| Additiv | 1 | 2 | 4 | 4 | - | - |
| Anteil [%] | 7 | 7 | 7 | 7 | - | - |
| Feinstanteil (2min) [%] | 1,3 | 2,3 | 13,9 | 15,1 | - | - |
| Perlabrieb (8min) [%] | 0,5 | 0,4 | 1,1 | 1,1 | - | - |
| d₂₀ [µm] | 580 | 310 | 110 | 720 | - | - |
| D₅₀ [µm] | 1160 | 620 | 480 | 1170 | - | - |
| D₈₀ [µm] | 1690 | 850 | 970 | 1680 | - | - |
| Max. Gleichgew. Kapazität Methylenblau [mg/g] | ca.130 | ca.180 | ca.180 | ca.180 | ca.75 | ca.70 |

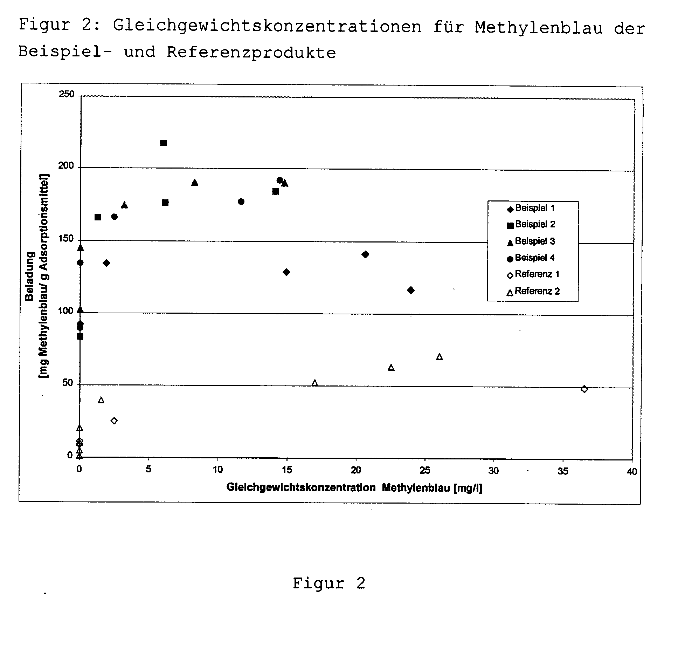

In Figur 2 ist die Gleichgewichtskapazität für Methylenblau an den verschiedenen Adsorptionsmitteln dargestellt.

Wie die ermittelten Adsorptionskapazitäten zeigen, weisen die erfindungsgemäßen Produkte eine erheblich höhere Aufnahmekapazität als die vergleichbaren Referenzprodukte auf.

### Beispiel 2: Gasphasenadsorption

Die Messung von Adsorptionsgleichgewichten an verschiedenen Adsorbern erfolgte in einer Thermowaage. Vor Versuchsbeginn werden die Proben bei 70° C unter Stickstoffatmosphäre für ca. 2 h getrocknet, um einen möglichen Einfluss von Restfeuchte auszuschließen. Die Adsorptionsmessungen erfolgen dann bei 25° C mit den Adsorptiven Toluol, Isopropanol und 1,2- Dichlorethan bei unterschiedlichen Partialdrücken. Stickstoff dient dabei als Trägergas. Die Adsorbenseinwaage beträgt ca. 200 mg, der über das Adsorbens geführte Gasstrom etwa 500 Nml/min. Das gasförmige Gemisch wird über die anfänglich unbeladene Probe geführt. Gemessen wird dann die Gewichtszunahme der Probe über der Zeit. Sobald die zeitliche Änderung der gemessenen Gewichtszunahme gegen Null strebt, ist von einem eingestellten Adsorptionsgleichgewicht in der Thermowaage auszugehen. Aus dem Verhältnis von Gewichtszunahme zu Probeneinwaage lässt sich nun ein Punkt der Adsorptionsisothermen bestimmen. Die Desorptionsversuche erfolgen mit reinem Stickstoff bei 25° und 70°C.

Die getesteten Adsorber unterscheiden sich im wesentlichen durch das Mengenverhältnis Ruß/Polymer sowie durch die Art des verwendeten Ruß.

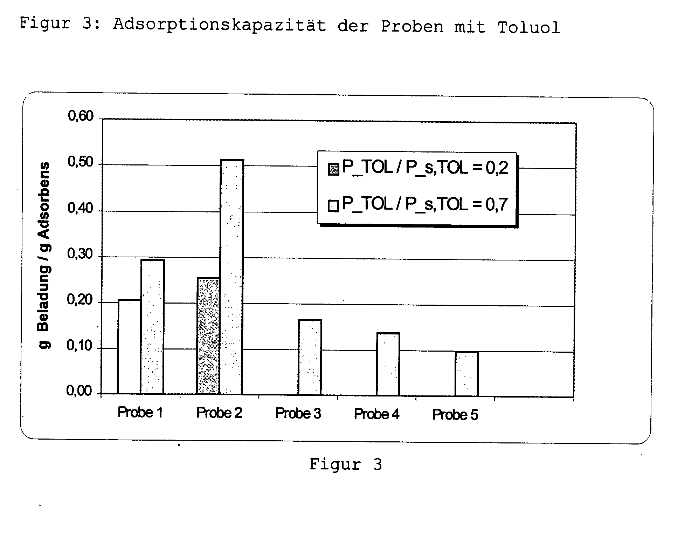

Die Figur 3 zeigt die gemessenen Adsorptionskapazitäten einiger untersuchter Proben bei 25° C. Dargestellt sind die Beladungen von Toluol, die sich hier aus dem Massenverhältnis von adsorbierter Stoffmenge und Probeneinwaage (trocken) ergeben. Ein Vergleich der einzelnen Produkte untereinander zeigt, dass insbesondere die Proben 1 und 2 sehr hohe Adsorptionskapazitäten ermöglichen.

Entscheidend für die Bewertung der neuen Adsorber ist der Vergleich mit Konkurrenzprodukten aus der Umwelttechnik. Als Konkurrenzprodukt ist vor allem Aktivkohle zu nennen. Wichtige Vergleichskriterien sind die Form von Adsorptionsisothermen im relevanten Konzentrationsbereich und das Regenerations- beziehungsweise Desorptionsverhalten. Beide Kriterien werden geprüft.

Technische Adsorbentien für die Umwelttechnik zeichnen sich vor allem dadurch aus, dass der Anstieg der Adsorptionsisothermen im Bereich kleiner Konzentrationen steil ist und dass bei höheren Konzentrationen eine Sättigungsbeladung vorliegt. Durch letztere Eigenschaft lassen sich beispielsweise bei schwankenden Abluftkonzentrationen unerwünschte Desorptionseffekte vermeiden.

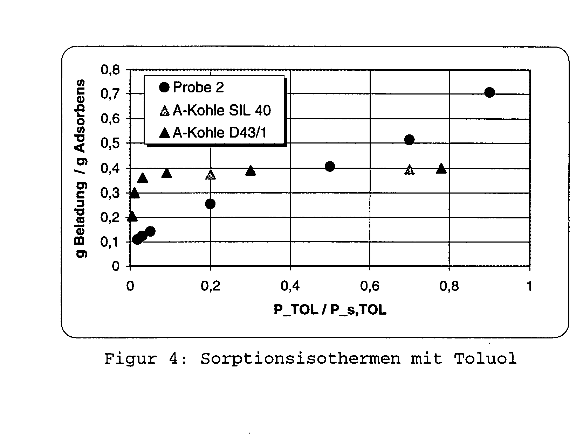

Figur 4 zeigt in diesem Zusammenhang die Isothermen von Toluol für Probe 2 sowie für zwei technische Aktivkohlen. Der Vergleich verdeutlicht, dass die Steigung der Isothermen von Probe 2 im Bereich kleiner Konzentrationen flacher ist als bei den Aktivkohlen. Bei mittleren Konzentrationen haben die Aktivkohlen bereits ihre Sättigungskapazität erreicht, während beim neuen Adsorptionsmittel ein weitgehend linearer Isothermenanstieg zu erkennen ist.

In diesem Konzentrationsbereich sind die Adsorptionskapazitäten vergleichbar. Bei sehr hohen Toluolkonzentrationen können mit dem neuen Adsorptionsmittel deutlich höhere Beladungen erzielt als mit den Aktivkohlen werden.

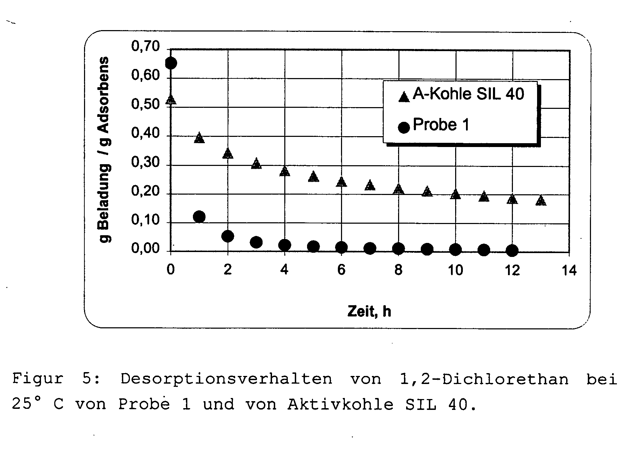

Das zweite Bewertungskriterium für die neuen Adsorber ist ihr Regenerationsverhalten. Figur 5 zeigt für Probe 1 und für die Aktivkohle SIL 40 die Kinetik der Desorption von DCE. Ausgehend von einem eingestellten Adsorptionsgleichgewicht bei einer DCE-Konzentration von PDCE / Ps,DCE = 0,7 wird das beladene Gas gegen ein Inertgas ausgetauscht. Gemessen wird dann die Gewichtsabnahme über der Zeit. Zu erkennen ist, dass die Desorption des neuen Adsorptionsmittels deutlich schneller ist als von der Aktivkohle. Im Hinblick auf die Regenerierung beladener Adsorbentien zeigt der neue Adsorber also deutliche Vorteile gegenüber der Aktivkohle.

## Patentansprüche

1. Adsorptionsmittel für organische Verbindungen, **dadurch gekennzeichnet, daß** sie aus einem Füllstoffgranulat, das Füllstoffe von 20 bis 99,9 Gew.-% und ein Bindemittel enthält, bestehen.

2. Adsorptionsmittel gemäß Anspruch 1, **dadurch gekennzeichnet, dass** als Füllstoff ein Furnaceruße, Gas- und Flammruße oder Ruße verwendet wird.

3. Adsorptionsmittel gemäß Anspruch 1, **dadurch gekennzeichnet, dass** als Füllstoff ein Ruß mit einer spezifischen Oberfläche von 500 bis 2000 m²/g und Struktur gemessen als DBP-Zahl von 300 bis 600 ml/100g verwendet wird.

4. Adsorptionsmittel gemäß Anspruch 1, **dadurch gekennzeichnet, dass** als Füllstoff Pyrolyse-, Lichtbogen- oder Plasmaruße verwendet werden.

5. Adsorptionsmittel gemäß Anspruch 1, **dadurch gekennzeichnet, dass** als Füllstoff Gummimehl, Aktivkohle, weiße Füllstoffe synthetischer Natur, gefällte oder pyrogene Kieselsäuren, Zeolithe, Natriumaluminiumsilicate oder natürliche Füllstoffe, Kieselkreide, Clays, Gips, Zement oder die bei der thermischen Aufbereitung von Lackschlämmen anfallenden Pulver verwendet werden.

6. Adsorptionsmittel gemäß Anspruch 1, **dadurch gekennzeichnet, dass** als Füllstoff oxidische oder silikatische Füllstoffe, gefällte oder pyrogenen Kieselsäure, verwendet wird, deren Oberfläche im allgemeinen mit einer oder mehreren Organosiliciumverbindungen der allgemeinen Formel
[ R¹ ₙ(RO)₃₋ₙ Si-(Alk)ₘ - (Ar)p ] q [B] (I),
R¹ ₙ(RO)₃₋ₙ Si - (Alkyl) (II),
oder
R¹ ₙ (RO)₃₋ₙ Si-(Alkenyl) (III),
in denen bedeuten
B: -SCN, -SH, -C1, -NH2 (wenn q = 1) oder -Sx- (wenn q = 2)
R und R¹: eine Alkylgruppe mit 1 bis 4
Kohlenstoffatomen,
verzweigt oder nicht verzweigt, den Phenylrest, wobei alle Reste R und R1 jeweils die gleiche oder eine verschiedene Bedeutung haben können, bevorzugt eine Alkylgruppe,
n: 0; 1 oder 2
Alk: einen zweiwertigen geraden oder verzweigten Kohlenstoffrest mit 1 bis 6 Kohlenstoffatomen,
m: 0 oder 1
Ar: einen Arylenrest mit 6 bis 12 C-Atomen
p: 0 oder 1 mit der Maßgabe, dass p und n nicht gleichzeitig 0 bedeuten,
x: eine Zahl von 2 bis 8,
Alkyl: einen einwertigen geraden oder verzweigten ungesättigten Kohlenwasserstoffrest mit 1 bis 20 Kohlenstoffatomen, bevorzugt 2 bis 8 Kohlenstoffatomen,
Alkenyl: einen einwertigen geraden oder verzweigten ungesättigten Kohlenwasserstoffrest mit 2 bis 20 Kohlenstoffatomen, bevorzugt 2 bis 8 Kohlenstoffatomen.
modifiziert ist.

7. Adsorptionsmittel gemäß Anspruch 1, **dadurch gekennzeichnet, dass** als Bindemittel Naturkautschuk, Emulsions-SBR mit einem Styrolanteil von 10 bis 50%, Butyl-Acrylnitril-Kautschuk, Butylkautschuk, Nitrilkautschuk, Terpolymere aus Ethylen, Propylen (EPM) und nicht konjugierte Diene (EPDM), Butadienkauschuk, DBR, hergestellt nach dem Lösungspolymerisationsverfahren, mit einem Styrolgehalt von 10 bis 25%, sowie Gehalten an 1,2-Vinylbestandteilen von 20 bis 55% und Isoprenkautschuken, insbesondere 3,4 Polyisopren, Fluorkautschuk, Chlorkautschuk, Silikonkautschuk, Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Blockpolymere, Epichlorhydrine, chemisch modifizierte Naturkautschuke wie zum Beispiel epoxidierte Typen, verdünnt oder unverdünnt einzeln oder im Gemisch mit einem Anteil von 0,1 bis 80 Gew.-% verwendet werden.

8. Adsorptionsmittel gemäß Anspruch 1, **dadurch gekennzeichnet, dass** als Bindemittel kohlenstoffhaltige Stoffe, Kunststoffe, Öle, parafinische Wachse natürlicher oder synthetischer Art oder Wasser einzeln oder im Gemisch mit einem Anteil von 0,1 bis 80 % verwendet werden.

9. Verfahren zur Herstellung der Adsorptionsmittel gemäß Anspruch 1, **dadurch gekennzeichnet, dass** man mindestens ein Bindemittel mit mindestens einem Füllstoffe mischt und in einem Misch- oder Granulationsapparat granuliert.

10. Verwendung der Adsorptionsmittel gemäß dem Anspruch 1, zur Adsorption und / oder Absorption von organischen und / oder anorganischen Stoffen aus einer flüssigen oder gasförmigen Phase.
